# EUROPÄISCHE PATENTANMELDUNG

(11) **EP 2 623 709 A1**
(43) Veröffentlichungstag der Anmeldung: **07.08.2013**
(21) Anmeldenummer: 12154736.8
(22) Anmeldetag: 09.02.2012
(51) Int. Cl.: E21B 43/24, H01G 4/04, H01G 4/38, H01G 4/40

(54) **Kondensatorvorrichtung für eine Leiterschleife einer Vorrichtung zur "in situ"-Förderung von Schweröl und Bitumen aus Ölsand-Lagerstätten.**

(30) Priorität: 27.10.2011 EP 11186890
(71) Anmelder: Siemens Aktiengesellschaft, 80333 München (DE)
(72) Erfinder: Diehl, Dirk, Dr., 91052 Erlangen (DE); Koch, Andreas, 91077 Neunkirchen am Brand (DE)

(57) **Zusammenfassung**

Die vorliegende Erfindung betrifft eine Kondensatorvorrichtung (10) für eine Leiterschleife (100) einer Vorrichtung zur "in situ"-Förderung von Schweröl und Bitumen aus Ölsand-Lagerstätten, gekennzeichnet durch ein Gehäuse (20) und eine darin angeordnete Kondensatoreinheit (30) für die Kompensation des induktiven Spannungsabfalls entlang der Leiterschleife (100), wobei zwei Anschlussschnittstellen (32a, 32b) vorgesehen sind, wobei jede Anschlussschnittstelle (32a, 32b) für die mechanische und elektrisch leitende Verbindung zwischen der Kondensatoreinheit (30) und einem Leitungselement (110) der Leiterschleife (100) ausgebildet ist.

## Beschreibung

Die vorliegende Erfindung betrifft eine Kondensatorvorrichtung für eine Leiterschleife einer Vorrichtung zur "in situ"-Förderung von Schweröl und Bitumen aus Ölsand-Lagerstätten, eine Leiterschleife mit einer Vielzahl von Leiterelementen und einer Kondensatorvorrichtung und ein Verfahren zur Herstellung einer Leiterschleife.

Es ist bekannt, dass zur Förderung von Öl auch Öllagerstätten infrage kommen, in welchen das Öl in einem Trennprozess vom Sand abgeschieden werden muss. In Lagerstätten, in welchen der Ölsand jedoch nicht im Tagebau zugänglich ist, erfolgt üblicherweise eine Förderung des Öls durch das Erhitzen des Ölsandes. Hierdurch wird die Viskosität des gebundenen Öls derart reduziert, dass es in konventioneller Weise abgepumpt werden kann. Bei bekannten Verfahren werden für das Erhitzen des Ölsandes erhitzter Dampf, erhitzte Luft oder ähnliche heiße Gase eingesetzt. Dies bringt den Nachteil mit sich, dass in sehr aufwendiger Weise eine Möglichkeit geschaffen werden muss, um die Gase in die gewünschte Position im Erdreich, nämlich zu dem Lagerort des Ölsandes, zu transportieren. Darüber hinaus ist aufgrund teilweise sehr tiefer und weit ausgedehnter Lagerstätten ein hoher Aufwand hinsichtlich des entstehenden Druckverlustes beim Einbringen der Gase/Dämpfe zu beachten.

Es ist weiter bekannt, dass für die Erzeugung eines induzierten Wirbelstroms im umgebenden Erdreich für die Erwärmung des Erdreichs ein Induktionskabel verwendet wird. Ein solches Induktionskabel wird vorzugsweise mit Wechselstrom im Frequenzbereich 10kHz bis 200kHz beaufschlagt und wird als Leiterschleife im Erdreich eines Reservoirs verlegt. Um die gewünschten induzierten Wirbelströme im Erdreich zu erzielen, wird ein entsprechender Wechselstrom an die Leiterschleife angelegt. Aufgrund der großen Länge einer solchen Leiterschleife, die bis zu mehreren Kilometern betragen kann, besteht jedoch das Problem, dass relativ hohe Spannungsabfälle durch die im umgebenden Erdreich induzierten Spannungen erzeugt werden. Diese hohen Spannungsabfälle führen zu immensen Kosten und Aufwendungen bei der Vorrichtung für den Betrieb einer derartigen Leiterschleife.

Aus der WO 2009/027305A2 ist grundsätzlich die Lösung eines solchen Problems bekannt. So ist dort beschrieben, dass einzelne Filamente einen Leiter mit einer verteilten Kapazität ausbilden. Mit anderen Worten werden eine Vielzahl von Kondensatoren über den Verlauf der Leiterschleife im Wesentlichen konstant verteilt, so dass durch diese Kondensatoren eine Kompensation des induktiven Spannungsabfalls erzeugt werden kann.

Nachteilig bei der voranstehend beschriebenen Lösung ist es, dass es sich bei der verteilten Kondensatoranordnung um eine Einschränkung hinsichtlich der mechanischen Eigenschaften der Leiterschleife selbst handelt. Die Leiterschleife muss in das Erdreich, zum Beispiel durch ein Bohrloch, eingebracht werden. Darüber hinaus verläuft die Leiterschleife nicht zwingend entlang einer geraden Strecke, sondern kann auch Biegungen und Krümmungen aufweisen. Dementsprechend muss beim Einführen und beim Betrieb einer solchen Leiterschleife beachtet werden, dass die Leitungselemente beziehungsweise alle Bauteile der Leiterschleife einer entsprechenden Zugbelastung beziehungsweise einer entsprechenden Biegebelastung standhalten. Dies führt dazu, dass bekannte Leiterschleifen mit verteilten Kapazitäten nicht in allen Einsatzbereichen verwendet werden können. Darüber hinaus werden die Einsatzmöglichkeiten verschiedenster Materialien für die Dielektrizitätsmaterialien der einzelnen Kondensatoren eingeschränkt, da sie ebenfalls den entsprechenden Biegespannungen und Zugspannungen widerstehen müssen. Dies führt darüber hinaus zu größeren Kabeldicken beziehungsweise zu schlechteren Kompensationsleistungen.

Es ist Aufgabe der vorliegenden Erfindung, die voranstehend beschriebenen Nachteile bei Vorrichtungen zur Förderung von Schweröl und Bitumen aus Ölsand-Lagerstätten zumindest teilweise zu beheben. Insbesondere ist es Aufgabe der vorliegenden Erfindung eine Kondensatorvorrichtung für eine Leiterschleife einer Vorrichtung zur "in situ"- Förderung von Schweröl und Bitumen aus Ölsand-Lagerstätten, eine entsprechende Leiterschleife sowie ein Verfahren zum Herstellen der Leiterschleife zur Verfügung zu stellen, welche in der Lage sind in kostengünstiger und einfacher Weise die gewünschte Zugspannungs- und Biegespannungsresistenz sowie hohe Spannungs- beziehungsweise Teilentladungsfestigkeiten des Kondensators zur Verfügung zu stellen.

Voranstehende Aufgabe wird gelöst durch eine Kondensatorvorrichtung mit den Merkmalen des Anspruchs 1, eine Leiterschleife mit den Merkmalen des Anspruchs 9 sowie ein Verfahren mit den Merkmalen des Anspruchs 13. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Kondensatorvorrichtung beschrieben sind, selbstverständlich auch im Zusammenhang mit dem erfindungsgemäßen Verfahren sowie der erfindungsgemäßen Leiterschleife und jeweils umgekehrt, so dass bezüglich der Offenbarung zu den einzelnen Erfindungsaspekten stets wechselseitig Bezug genommen wird beziehungsweise werden kann.

Eine erfindungsgemäße Kondensatorvorrichtung ist für eine Leiterschleife einer Vorrichtung zur "in situ"- Förderung von Schweröl und Bitumen aus Ölsand-Lagerstätten geeignet. Sie zeichnet sich dadurch aus, dass ein Gehäuse und eine darin angeordnete Kondensatoreinheit für die Kompensation des induktiven Spannungsabfalls entlang der Leiterschleife vorgesehen sind. Weiter sind zwei Anschlussschnittstellen vorhanden, wobei jede Anschlussschnittstelle für die mechanische und elektrisch leitende Verbindung zwischen der Kondensatoreinheit und einem Leitungselement der Leiterschleife ausgebildet ist. Damit kann eine erfindungsgemäße Kondensatorvorrichtung jeweils zwischen zwei Leitungselementen eingesetzt werden. Das bedeutet, dass jede Kondensatorvorrichtung pro Anschlussschnittstelle mit genau einem benachbarten Leitungselement, also insgesamt mit den beiden benachbarten Leitungselementen über die beiden Anschlussschnittstellen, mechanisch und elektrisch Verbindung hält. Beim Vorsehen einer Mehrzahl von Kondensatorvorrichtungen ist zwischen zwei benachbarten Leitungselementen bevorzugt immer nur eine einzige Kondensatorvorrichtung angeordnet. Man kann auch davon sprechen, dass die Anschlussschnittstellen vorzugsweise spezifisch für jeweils ein einziges Leitungselement ausgebildet sind, so dass eine Mehrfachbelegung der Schnittstellen beziehungsweise des Leitungselementes nicht möglich ist.

Die Ausbildung der Anschlussschnittstellen für die mechanische und elektrische Verbindung kann derart ausgeführt sein, dass diese beiden Verbindungsarten über gleiche Mittel und/oder an der gleichen Stelle der Anschlussschnittstelle zur Verfügung gestellt werden. Weiter ist es auch möglich, dass die mechanische Verbindung, insbesondere in kraftschlüssiger Weise, örtlich separat von der elektrischen Verbindung, insbesondere in flexibler und elektrisch isolierender Weise, erfolgt. Für die elektrische Kontaktierung können zum Beispiel Litzen, Spiralfedern, Bänder und/oder Fahnen eingesetzt werden.

Durch eine erfindungsgemäße Kondensatorvorrichtung wird die gewünschte Kapazität zur Kompensation des induktiven Spannungsabfalls in die Kondensatorvorrichtung konzentriert, wodurch die Leitungselemente einfache Leiter sein können. Diese Leitungselemente können zum Beispiel als Metallrohre, insbesondere Aluminium- oder Kupferrohre, ausgebildet sein. Durch die Konzentration der Kapazitäten in die Kondensatorvorrichtung können unterschiedliche mechanische Belastungssituationen durch die Leitungselemente beziehungsweise die Kondensatorvorrichtung zur Verfügung gestellt werden. So kann die Kondensatorvorrichtung mechanisch relativ steif ausgebildet sein, da sie mit Bezug auf die Gesamtlänge der Leiterschleife nur eine geringe axiale Dimension aufweist. Insbesondere ist sie im Bereich zwischen 0,5 und 1m lang beziehungsweise ca. 60cm lang. Damit kann beim Einführen in ein Bohrloch eine solche Kondensatorvorrichtung auch um entsprechende Radien geführt werden, ohne dass eine Biegung der Kondensatorvorrichtung selbst notwendig ist. Auch eine höhere Zugbelastung ist durch die Kondensatorvorrichtung nicht zwingend notwendig, da diese ebenfalls durch die Leitungselemente abgetragen werden können.

Die Leitungselemente sind selbst deutlich länger und zum Beispiel zwischen 10 und 20m lang. Dies führt dazu, dass die Leitungselemente die gewünschte Biegefreiheit zur Verfügung stellen, um einem geradlinigen oder auch gekrümmten Verlauf im Inneren eines Reservoirs einer Ölsand-Lagerstätte zu folgen. Mit anderen Worten wird durch eine erfindungsgemäße Kondensatorvorrichtung eine konzentrierte Kapazität zur Verfügung gestellt, so dass hinsichtlich der mechanischen Anforderungen an die Leiterschleife eine Differenzierung zwischen der Biegsamkeit der Leitungselemente einerseits und einer mechanisch hohen Steifigkeit der Kondensatorvorrichtung andererseits gesprochen werden kann.

Die Kondensatoreinheit einer erfindungsgemäßen Kondensatorvorrichtung kann selbstverständlich in unterschiedlichster Weise ausgebildet sein. Bevorzugt können Kondensatorplatten oder plattenartige Elemente eingesetzt werden, um in der Kondensatoreinheit die gewünschte Kapazität zur Verfügung zu stellen. Auch komplexere Ausführungsformen, wie zum Beispiel beschichtete flexible Folien, die mit glasartigen Dielektrizitätsfolien beschichtet sind, sind selbstverständlich möglich und ermöglichen noch breitere beziehungsweise flexiblere Bauformen einer solchen Kondensatorvorrichtung. Die gesamte Kondensatorvorrichtung ist vorzugsweise zwischen einem halben und ca. 1m, insbesondere ca. 0,6m lang. Sie weist eine Dicke von ca. 50 bis 250mm auf, insbesondere zwischen ca. 100 und ca. 180mm. Damit entspricht sie vorzugsweise den Durchmessern der angrenzenden und benachbarten Leitungselemente, so dass sie sich im Wesentlichen nahtlos in eine Leiterschleife einfügen lässt. Hinsichtlich der Gesamtlänge erstrecken sich die einzelnen Kondensatorvorrichtungen vorzugsweise über weniger als 50% der Gesamtlänge einer Leiterschleife. Bevorzugt ist dieser Wert noch geringer, zum Beispiel zwischen ca. 5 und ca. 20% der Länge der Leiterschleife. Auf diese Weise werden sozusagen diskrete Kondensatoren beziehungsweise diskrete Kapazitäten zur Verfügung gestellt, die in einer solchen Leiterschleife im Wesentlichen flexibel hinsichtlich ihrer Orte eingebaut werden können.

Die Anschlussschnittstellen bei einer erfindungsgemäßen Kondensatorvorrichtung sind vorzugsweise an den beiden Stirnseiten bezogen auf die axiale Erstreckung der Kondensatorvorrichtung angeordnet. Dies führt dazu, dass sich die Kondensatorvorrichtungen besonders einfach in den Verlauf einer Leiterschleife integrieren lässt, da sie im Wesentlichen der Geometrie der Leiterschleife beziehungsweise der benachbarten Leitungselemente folgt.

Eine erfindungsgemäße Kondensatorvorrichtung kann dabei sowohl vor Ort beim Einsatz in einem Bohrloch, also vor dem Einführen in das Bohrloch, als auch an ihrer Montageposition gefertigt werden beziehungsweise mit den Leitungselementen verbunden werden. Dies erhöht die Flexibilität des Einsatzes der Kondensatorvorrichtungen, da insbesondere auf der Baustelle vor Ort vor dem Einführen in ein Bohrloch entschieden werden kann, wo beziehungsweise wie viele Kondensatorvorrichtungen an bestimmten Positionen der Leiterschleife notwendig sind.

Ein weiterer Vorteil kann dadurch erzielt werden, dass bei einer erfindungsgemäßen Kondensatorvorrichtung die Kondensatoreinheit zumindest zwei Kondensatorplatten mit dazwischen angeordneter dielektrischer Schicht aufweist. Dabei stehen die Kondensatorplatten jeweils mit einer Anschlussschnittstelle in elektrisch leitendem Kontakt. Mit anderen Worten wird dadurch ein Kontakt mit dem jeweils benachbartem Leitungselement hergestellt. Dies führt dazu, dass beispielsweise ein erstes Leitungselement über eine erste Anschlussschnittstelle direkt oder indirekt mit einer ersten Kondensatorplatte beziehungsweise mit einer ersten Menge von Kondensatorplatten in elektrisch leitendem Kontakt steht. Gleiches trifft auch auf ein zweites, zum Beispiel rechtes, Leitungselement zu, welches mit der zweiten Anschlussschnittstelle mit einer zweiten Kondensatorplatte beziehungsweise einer zweiten Menge von Kondensatorplatten direkt oder indirekt in elektrisch leitendem Kontakt steht. Die einzelnen Kondensatorplatten sind einander gegenüberliegend und isoliert angeordnet, so dass dazwischen eine dielektrische Schicht ausgebildet wird. Damit wird die gewünschte Kapazität für die Kompensation der induzierten Spannungsabfälle zur Verfügung gestellt. Vorzugsweise ist eine Vielzahl von Kondensatorplatten vorgesehen. Insgesamt handelt es sich vorzugsweise um eine Anzahl von 100 bis 1000 einzelner Kondensatorplatten. Diese können zum Beispiel aus Aluminium oder Kupfer ausgebildet sein. Die Dicke der einzelnen Platten ist relativ gering gehalten und ist insbesondere im Bereich von ca. 30µm ausgebildet. Vorzugsweise sind die Abstände der Kondensatorplatten im Wesentlichen konstant, so dass man von einer im Wesentlichen parallelen Anordnung sprechen kann. Damit kann auf relativ kleinem Bauraum eine große Kapazität zur Verfügung gestellt werden, so dass auch bei kompakter Ausführung der Kondensatorvorrichtung die gewünschten erfindungsgemäßen Vorteile erzielt werden können.

Weiter ist es vorteilhaft, wenn bei einer erfindungsgemäßen Kondensatorvorrichtung die Kondensatoreinheit zwei Plattenträger aufweist, an welchen jeweils zumindest eine Kondensatorplatte elektrisch leitend angeordnet ist. Damit dient der Plattenträger sozusagen zur mechanischen Unterstützung der Kondensatorplatten. Er trägt diese Kondensatorplatten, die insbesondere parallel zueinander auf dem Plattenträger angeordnet sind. Dies führt dazu, dass bei dem Vorsehen von zwei Plattenträgern mit jeweils im Wesentlichen parallel angeordneten Kondensatorplatten die entsprechenden Kondensatorplattenpakete der beiden Plattenträger zum Beispiel kammartig ineinander greifen. Damit steht den meisten der Kondensatorplatten auf ihren beiden Seiten über eine dielektrische Schicht eine Kapazität zur gegenüberliegenden Kondensatorplatte zur Verfügung. Mit anderen Worten kann bei dieser Ausführungsform der Plattenträger auch als indirekter elektrisch leitender Kontakt zwischen der jeweiligen Kondensatorplatte und der jeweiligen Anschlussschnittstelle bezeichnet werden.

Ebenfalls vorteilhaft ist es, wenn bei einer erfindungsgemäßen Kondensatorvorrichtung zumindest ein Plattenträger wenigstens abschnittsweise halbschalenförmig ausgebildet ist. Da es sich bei bekannten Leiterschleifen häufig um Leitungselemente handelt, die einen runden oder im Wesentlichen runden Querschnitt aufweisen, folgt ein im Wesentlichen abschnittsweise halbschalenförmig ausgebildeter Plattenträger dieser im Wesentlichen runden Querschnittsform. Damit kann eine bessere Integration der Kondensatorvorrichtung in eine bekannte Leiterschleife erzielt werden. Darüber hinaus wird der Platz im Inneren der Kondensatorvorrichtung, also im Inneren des Gehäuses, besonders vorteilhaft genutzt. So können sich die halbschalenförmigen Plattenträger zum Beispiel entlang einer Zylindermantelfläche beziehungsweise eines Abschnitts einer Zylindermantelfläche erstrecken. Vorzugsweise kann also von einer Zylinderhalbschale gesprochen werden, die um die Zylinderachse insbesondere ca. 140° Erstreckung aufweist. Die Kondensatorplatten weisen bei so einer Ausführungsform zumindest eine abgerundete beziehungsweise teilweise abgerundete Kante auf, die in diese Zylinderhalbschale eingesteckt ist beziehungsweise mit dieser im elektrisch leitenden Kontakt steht.

Weiter kann es vorteilhaft sein, wenn bei einer erfindungsgemäßen Kondensatorvorrichtung die Kondensatorplatten zumindest teilweise eine Beschichtung als dielektrische Schicht aufweisen. Auf diese Weise kann vollständig oder zumindest teilweise die benötigte dielektrische Schicht für die Ausbildung der gewünschten Kapazitäten zur Verfügung gestellt werden. Werden die Kondensatorplatten vor der Montage beschichtet, so kann zum Beispiel durch Verpressen der Platten zu einem Verbund die jeweilige dielektrische Schicht auch als Haftmaterial zwischen den einzelnen Kondensatorplatten verwendet werden. Die Beschichtung ist vorzugsweise ein keramischer Werkstoff, der die gewünschten elektrotechnischen Anforderungen auch bei hohen Temperaturen mit sich bringt. Ein keramischer Werkstoff wird erst bei einer erfindungsgemäßen Kondensatorvorrichtung überhaupt einsetzbar, da bei einer verteilten Kapazität gemäß dem Stand der Technik der keramische Werkstoff durch die entstehenden Zug- und Biegebelastungen beim Einführen der Leiterschleife in das Erdreich beschädigt werden würde. Erst durch die Konzentration der Kapazitäten gemäß der vorliegenden Erfindung werden die mechanischen Belastungen auf die Leitungselemente fokussiert, so dass die Kondensatorvorrichtung mechanisch steifer und damit geschützter ausgestaltet werden kann. Somit können auch sensiblere Werkstoffe, wie zum Beispiel keramische Werkstoffe, als dielektrische Schicht eingesetzt werden. Selbstverständlich können auch andere Materialien, wie zum Beispiel Glas oder glasartige Materialien beziehungsweise Glasfolien, als dielektrische Schicht eingesetzt werden. Auch die Verwendung von Glimmer als dielektrische Schicht ist im Rahmen der vorliegenden Erfindung denkbar. Ebenfalls vorteilhaft ist es, wenn bei einer erfindungsgemäßen Kondensatorvorrichtung die dielektrische Schicht zumindest teilweise als Fluid ausgebildet ist. Hierfür sind die Abstände zwischen den einzelnen Kondensatorplatten vorzugsweise konstant oder im Wesentlichen konstant gehalten. Dies kann zum Beispiel über eine Halterung, insbesondere in Form eines Käfigs, erfolgen. Dies führt dazu, dass die käfigartige Ausbildung der einzelnen Kondensatorplatten zwar eine mechanische Stabilität aufweist, jedoch die dielektrische Schicht als Fluid keinerlei mechanische Spannung beziehungsweise nur geringe mechanische Spannung auf die jeweilige Kondensatorplatte übergibt. Als Fluid kann zum Beispiel eine Flüssigkeit oder ein Gas, insbesondere ein Schutzgas, Verwendung finden. Damit kann eine erfindungsgemäße Kondensatorvorrichtung noch unempfindlicher hinsichtlich mechanischer Belastungen von außen ausgebildet sein.

Darüber hinaus kann es von Vorteil sein, wenn bei einer erfindungsgemäßen Kondensatorvorrichtung die Kondensatoreinheit und/oder das Gehäuse mit einem fließfähigen, aushärtbaren Material gefüllt sind. Dies kann zum Beispiel ein Harzmaterial, insbesondere Kunststoffharz, sein. Als Beispiel sei hier Epoxidharz genannt. Dieses fließfähige, aushärtbare Material stellt vorzugsweise die elektrische Isolierung der Kondensatoreinheit im Gehäuse dar. Darüber hinaus kann dieser Füllstoff auch die dielektrische Schicht teilweise oder vollständig darstellen. Die Füllstoffe sind darüber hinaus vorzugsweise angepasst an thermische Ausdehnungen für Temperaturbereiche bis 300°C. Insbesondere fokussiert diese Anpassung, dass die thermische Ausdehnung des Materials minimiert wird, um mechanische Spannungen im Inneren der Kondensatorvorrichtung zu reduzieren. Selbstverständlich ist auch ein keramischer beziehungsweise ein teilkeramischer Verguss denkbar, der ebenfalls gleichzeitig die dielektrische Schicht der Kondensatoreinheit ausbildet. Der Verguss kann auch einen Hochtemperaturkleber aufweisen.

Ein weiterer Vorteil wird dann erzielt, wenn bei einer erfindungsgemäßen Kondensatorvorrichtung die Anschlussschnittstellen für wenigstens eine der folgenden mechanischen Verbindungsarten ausgebildet sind:
- Verschraubung,
- Verschweißen,
- Vernieten ,
- Passung, insbesondere Presspassung.

Bei den voranstehenden Aufzählungen handelt es sich um Möglichkeiten, die in nicht abschließender Weise die mechanische Verbindungskomponente der jeweiligen Anschlussschnittstelle darstellen. Insbesondere sind diese besonders leicht vor Ort herstellbar, zum Beispiel wenn es sich um eine Passung beziehungsweise um ein Verschrauben handelt. Dabei kann diese Ausbildung der mechanischen Verbindung mit einer Isolierung einhergehen, so dass beispielsweise jeweils die Anschlussschnittstelle Isoliermaterial, zum Beispiel in Form eines O-Rings, aufweisen kann.

Ein weiterer Gegenstand der vorliegenden Erfindung ist eine Leiterschleife mit einer Vielzahl von Leitungselementen für eine Vorrichtung zur "in situ"-Förderung von Schweröl und Bitumen aus Ölsand-Lagerstätten. Eine solche erfindungsgemäße Leiterschleife zeichnet sich dadurch aus, dass zwischen einer Mehrzahl von jeweils zwei benachbarten Leitungselementen eine Kondensatorvorrichtung gemäß der vorliegenden Erfindung über ihre Anschlussschnittstellen elektrisch leitend und mechanisch mit den benachbarten Leitungselementen verbunden ist. Mit anderen Worten handelt es sich hier um eine Leiterschleife, bei welcher eine Vielzahl von Leitungselementen und eine Vielzahl von erfindungsgemäßen Kondensatorvorrichtungen im Einsatz sind. Zwischen jeweils zwei benachbarten Leitungselementen ist bevorzugt immer nur eine einzige Kondensatorvorrichtung angeordnet. Die Verteilung der Kondensatorvorrichtungen kann dabei sowohl symmetrisch, als auch asymmetrisch erfolgen. Das bedeutet, dass eine Verteilung der Kondensatorvorrichtung gleichmäßig über die gesamte Leitungsschleife durchgeführt werden kann. Auch ist es möglich, dass einzelne Bereiche der Leiterschleife mit einer höheren Dichte der Kondensatorvorrichtung, zum Beispiel alle 15m, vorgesehen sein können. Andere Bereiche sind mit einer geringeren Dichte der Kondensatorvorrichtung, zum Beispiel nur alle 40m, ausgestattet. Hier kann flexibel auf entsprechende Situationen im Erdreich reagiert werden, so dass unnötig hohe Anzahlen an Kondensatorvorrichtungen vermieden werden und damit die Kosten gesenkt werden können. Durch die Verwendung einer erfindungsgemäßen Kondensatorvorrichtung bringt eine erfindungsgemäße Leiterschleife die gleichen Vorteile mit sich, wie sie ausführlich mit Bezug auf die erfindungsgemäße Kondensatorvorrichtung erläutert worden sind. Die Leitungselemente sind zum Beispiel aus Aluminium oder Kupfer und insbesondere nicht ferromagnetisch ausgestaltet, um Hystereseverluste zu verringern oder zu vermeiden. Die Leitungselemente der Leiterschleife können vorzugsweise gleiche oder im Wesentlichen gleiche Zugfestigkeiten aufweisen.

Eine erfindungsgemäße Leiterschleife kann sich dahingehend weiterbilden lassen, dass die Anzahl der Leitungselemente die Anzahl der Kondensatoreinheiten um mehr als 1 übersteigt. Das bedeutet, dass zumindest zwischen zwei Kondensatoreinheiten zwei oder mehr Leitungselemente angeordnet sind. Dies führt dazu, dass in flexibler Weise der Abstand zwischen den einzelnen Kondensatoreinheiten durch die Anzahl der entsprechend verwendeten dazwischen liegenden Leitungselemente angepasst werden kann. Dies erfolgt insbesondere vor Ort, so dass durch das Zurverfügungstellen von zwei einzigen Grundbauteilen, nämlich einem Leitungselement von zum Beispiel ca. 20m und einer Kondensatorvorrichtung, eine Vielzahl von flexiblen Konfigurationen auswählbar ist.

Eine weitere Ausführungsform der erfindungsgemäßen Leiterschleife kann dadurch erzielt werden, dass die Leitungselemente zumindest teilweise metallische Rohre, insbesondere Aluminiumrohre, aufweisen. Dadurch, dass hauptsächlich die Oberfläche der Leitungselemente für die gewünschte Induktion im umgebenden Erdreich dient, kann durch die Verwendung von metallischen Rohren Material gespart werden. Insbesondere sind die Rohre innen vollständig hohl, so dass auch Gewicht eingespart wird. Die Oberfläche dieser metallischen Rohre ist vorzugsweise mit einer Isolierung beschichtet, um Kurzschlüsse mit dem umgebenden Erdreich zu vermeiden. Alternativ zu Aluminiumrohren sind zum Beispiel auch Kupferrohre denkbar.

Eine erfindungsgemäße Leiterschleife kann vorteilhafter Weise dahingehend weitergebildet sein, dass die Leitungselemente zumindest abschnittsweise biegbar und/oder zugbelastbar sind. Insbesondere wird eine Biegung von Radien bis zu 100m ermöglicht, wobei eine Zugbelastung von insbesondere mehr als 10t möglich ist. Diese Biegbarkeit beziehungsweise Zugbelastbarkeit ist insbesondere beim Einbringen in das Erdreich wichtig. Die Biegbarkeit wird vorzugsweise im Wesentlichen ausschließlich von den Leitungselementen wahrgenommen, so dass die Kondensatorvorrichtungen entsprechend mechanisch eine höhere Stabilität aufweisen können. Während die Zugbelastbarkeit von Leitungselementen und Kondensatorvorrichtungen in gleicher Weise erfüllt sein muss.

Ebenfalls Gegenstand der vorliegenden Erfindung ist ein Verfahren für die Herstellung einer Leiterschleife, insbesondere gemäß der vorliegenden Erfindung. Ein derartiges Verfahren zeichnet sich dadurch aus, dass eine Mehrzahl von erfindungsgemäßen Kondensatorvorrichtungen über ihre Anschlussschnittstellen mit jeweils zwei benachbarten Leitungselementen elektrisch leitend und mechanisch verbunden wird. Damit werden durch die Verwendung einer erfindungsgemäßen Mehrzahl von Kondensatorvorrichtungen die gleichen Vorteile erzielt, wie sie ausführlich mit Bezug auf eine erfindungsgemäße Leiterschleife beziehungsweise mit Bezug auf eine erfindungsgemäße Kondensatorvorrichtung erläutert worden sind.

Das erfindungsgemäße Verfahren kann sich dadurch weiterbilden lassen, dass anschließend die Leiterschleife wenigstens abschnittsweise mit einer Isolationsschicht versehen wird. Dies kann zum Beispiel durch Umwickeln mit einem Isolationsband erfolgen. Insbesondere wird dabei ein Isolieren der Spalte zwischen den Kondensatorvorrichtungen und den Leitungselementen erfolgen. Dies kann insbesondere dann ausreichen, wenn sowohl Kondensatorvorrichtung, als auch Leitungselement bereits vorab mit einer Isolationsschicht versehen sind. Auch ein vollständiges Isolieren vor Ort durch eine durchlaufende Isolationsschicht ist selbstverständlich im Rahmen der vorliegenden Erfindung denkbar.

Ebenfalls eine Weiterbildung eines erfindungsgemäßen Verfahrens ist es, wenn der Abstand zwischen den Kondensatorvorrichtungen durch die entsprechende Länge der dazwischen liegenden Leitungselemente derart eingestellt wird, dass der von der Geometrie des jeweiligen Leitschleifenabschnitts abhängige Induktivitätsbelag bei Verwendung durch die Kondensatorvorrichtung mit konstanter oder im Wesentlichen konstanter Kapazität kompensiert wird. Vorzugsweise werden Leiterelemente mit konstanter oder im Wesentlichen konstanter, insbesondere einheitlicher, Länge verwendet. Die Auswahl erfolgt vorzugsweise derart, dass die von der Geometrie des jeweiligen Leierschleifenabschnitts abhängige Induktivität kompensiert wird. Auch möglich ist es, dass für eine abschnittsweise Kompensation der Induktivität der Leiterschleife sowohl der Kapazitätswert der Kondensatorvorrichtungen, als auch die Länge der Leitungselemente angepasst werden.

Die vorliegende Erfindung wird näher erläutert anhand der beigefügten Zeichnungsfiguren. Es zeigen schematisch:
- Figur 1: eine erste Ausführungsform einer erfindungsgemäßen Kondensatorvorrichtung,
- Figur 2: eine weitere Ausführungsform einer erfindungsgemäßen Kondensatoreinheit,
- Figur 3: eine Ausführungsform einer erfindungsgemäßen Leiterschleife, und
- Figur 4: eine weitere Ausführungsform einer erfindungsgemäßen Leiterschleife.

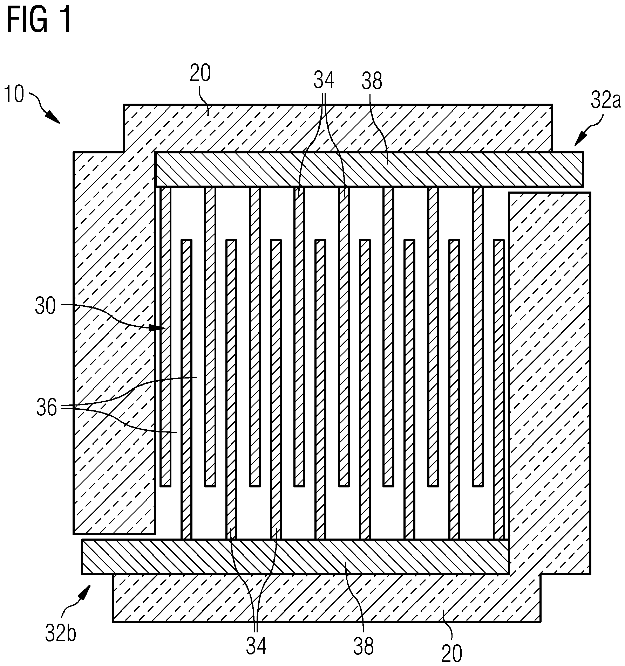

Elemente gleicher Funktion und Wirkungsweise sind den Fig. 1 bis 4 jeweils mit denselben Bezugszeichen versehen. In Fig. 1 ist eine erste Ausführungsform einer erfindungsgemäßen Kondensatorvorrichtung 10 dargestellt. Sie ist mit einem Gehäuse 20 versehen, welches vorzugsweise elektrisch isolierend wirkt. Im Inneren dieses Gehäuses 20 ist eine Kondensatoreinheit 30 angeordnet. Sie weist eine Vielzahl von sich gegenüber stehenden Kondensatorplatten 34 auf, die jeweils als Kondensatorplattenpaket zu bezeichnen sind. Sie werden alle von einem Plattenträger 38 getragen. Der jeweilige Plattenträger 38 bildet gleichzeitig zumindest teilweise die Anschlussschnittstellen 32a und 32b aus. An diesen Anschlussschnittstellen 32a und 32b erfolgt eine Kontaktierung in mechanischer und elektrisch leitender Weise an später dort angeschlossene Leitungselemente 110.

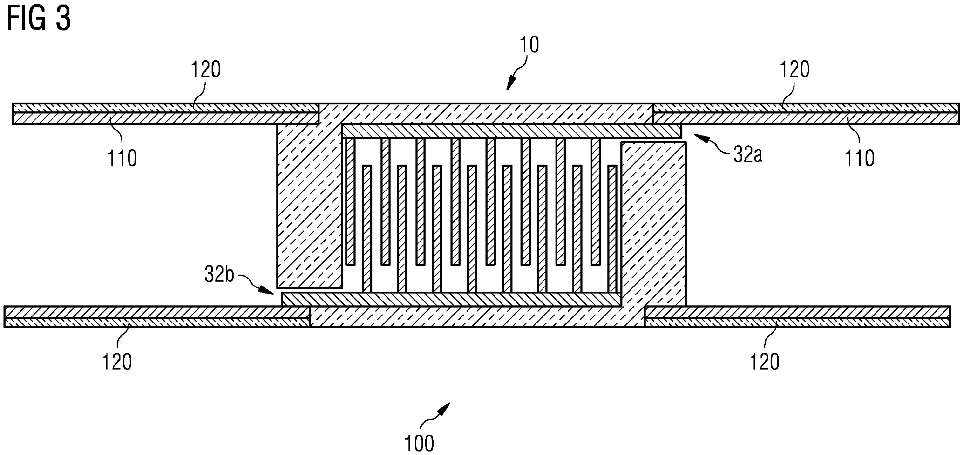

Die zusammengebaute Variante ist zum Beispiel in Fig.3 zu erkennen. Dort ist bei einer Kondensatorvorrichtung 10 gemäß Fig.1 auf beiden Seiten ein Leitungselement 110 an die jeweilige Anschlussschnittstelle 32a und 32b angesetzt. Das Verbinden in mechanischer Weise erfolgt vorzugsweise durch eine Presspassung, also insbesondere durch thermisches Aufschrumpfen. Die Leitungselemente 110 sind von einer Isolationsschicht 120, insbesondere aus Kunststoff, umgeben. Damit wird nach außen eine vollständige elektrische Isolierung gewährleistet, die dann mit der Kondensatoreinheit 10 durch das Gehäuse 20 fortgesetzt wird. Der Spalt zwischen Kondensatorvorrichtung 10 und dem Leitungselement 110 kann zum Beispiel mit einem Isolierband zusätzlich elektrisch isoliert werden.

Wie in Fig.3 gut zu erkennen ist sind die Leitungselemente 110 hohl und die Kondensatoreinheit 30 auf die Kondensatorvorrichtung 10 konzentriert. Die Leitungselemente 110 können damit Biege- und Zugbelastungen standhalten, ohne dass in der Kondensatorvorrichtung 10 eine solche Spannung zu Brüchen oder mechanischen Beschädigungen der Kondensatoreinheit 30 führt.

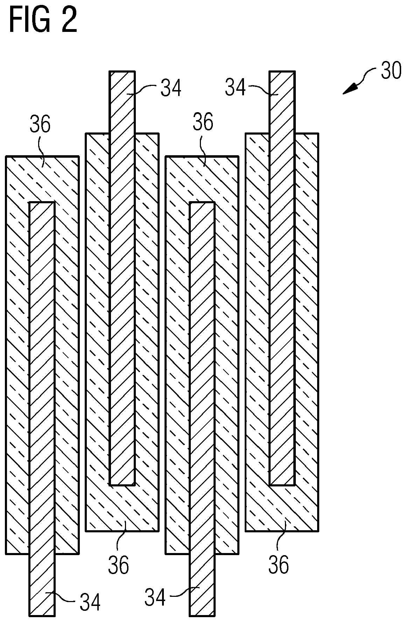

In Fig.2 ist eine weitere Ausführungsform einer erfindungsgemäßen Kondensatoreinheit 30 dargestellt. Dort sind die einzelnen Kondensatorplatten 34 mit einer dielektrischen Schicht beschichtet, so dass durch anschließendes Verpressen ein Stapel für die Kondensatoreinheit 30 zur Verfügung gestellt werden kann. Bei einer solchen Ausführungsform wird der Platzbedarf einerseits reduziert und gleichzeitig die notwendige mechanische Stabilität für die Kondensatoreinheit 30 zur Verfügung gestellt.

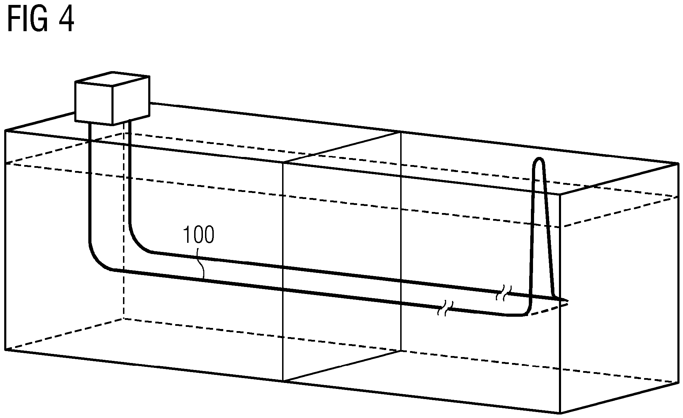

Fig.4 zeigt eine Einsatzsituation in schematischer Darstellung. So ist dort eine Leiterschleife 100, wie sie zum Beispiel der Fig.3 zu entnehmen ist, in einem Erdreich verlegt. Der Kasten zeigt eine Betriebsstation, über welche die Spannung für den Induktionsbetrieb der Leiterschleife 100 eingestellt werden kann.

Vorzugsweise ist eine Leiterschleife flexibel ausgestaltet, so dass die Leiterschleife gebogen werden kann und in eine beliebige Bohrung eingeführt werden kann. Voranstehende Erläuterung der Zeichnungsfiguren beschreibt die vorliegende Erfindung nur im Rahmen von Beispielen. Selbstverständlich können einzelne Merkmale der einzelnen Ausführungsformen, sofern technisch sinnvoll, frei miteinander kombiniert werden, ohne den Rahmen der vorliegenden Erfindung zu verlassen.

## Patentansprüche

1. Kondensatorvorrichtung (10) für eine Leiterschleife (100) einer Vorrichtung zur "in situ"-Förderung von Schweröl und Bitumen aus Ölsand-Lagerstätten, **gekennzeichnet durch** ein Gehäuse (20) und eine darin angeordnete Kondensatoreinheit (30) für die Kompensation des induktiven Spannungsabfalls entlang der Leiterschleife (100), wobei zwei Anschlussschnittstellen (32a, 32b) vorgesehen sind, wobei jede Anschlussschnittstelle (32a, 32b) für die mechanische und elektrisch leitende Verbindung zwischen der Kondensatoreinheit (30) und einem Leitungselement (110) der Leiterschleife (100) ausgebildet ist.

2. Kondensatorvorrichtung (10) nach Anspruch 1,
**dadurch gekennzeichnet,**
**dass** die Kondensatoreinheit (30) zumindest zwei Kondensatorplatten (34) mit dazwischen angeordneter dielektrischer Schicht (36) aufweist, wobei die Kondensatorplatten (34) jeweils mit einer Anschlussschnittstelle (32a, 32b) in elektrisch leitendem Kontakt stehen.

3. Kondensatorvorrichtung (10) nach Anspruch 2,
**dadurch gekennzeichnet,**
**dass** die Kondensatoreinheit (30) zwei Plattenträger (38) aufweist, an welchen jeweils zumindest eine Kondensatorplatte (34) elektrisch leitend angeordnet ist.

4. Kondensatorvorrichtung (10) nach Anspruch 3,
**dadurch gekennzeichnet,**
**dass** zumindest ein Plattenträger (38) wenigstens abschnittsweise halbschalenförmig ausgebildet ist.

5. Kondensatorvorrichtung (10) nach einem der Ansprüche 2 bis 4, **dadurch gekennzeichnet, dass** die Kondensatorplatten (34) zumindest teilweise eine Beschichtung als dielektrische Schicht (36) aufweisen.

6. Kondensatorvorrichtung (10) nach einem der Ansprüche 2 bis 5, **dadurch gekennzeichnet, dass** die dielektrische Schicht (36) zumindest teilweise als Fluid ausgebildet ist.

7. Kondensatorvorrichtung (10) nach einem der vorangegangenen Ansprüche,
**dadurch gekennzeichnet,**
**dass** die Kondensatoreinheit (30) und/oder das Gehäuse (20) mit einem fließfähigen, aushärtbaren Material gefüllt sind.

8. Kondensatorvorrichtung (10) nach einem der vorangegangenen Ansprüche,
**dadurch gekennzeichnet,**
**dass** die Anschlussschnittstellen (32a, 32b) für wenigstens eine der folgenden mechanischen Verbindungsarten ausgebildet sind:
- Verschraubung,
- Verschweißen,
- Vernieten,
- Passung, insbesondere Presspassung.

9. Leiterschleife (100) mit einer Vielzahl von Leitungselementen (110) für eine Vorrichtung zur "in situ"-Förderung von Schweröl und Bitumen aus Ölsand-Lagerstätten,
**dadurch gekennzeichnet,**
**dass** zwischen einer Mehrzahl von jeweils zwei benachbarten Leitungselementen (110) eine Kondensatorvorrichtung (10) mit den Merkmalen eines der Ansprüche 1 bis 8 über ihre Anschlussschnittstellen (32a, 32b) elektrisch leitend und mechanisch mit den benachbarten Leitungselementen (110) verbunden ist.

10. Leiterschleife (100) nach Anspruch 9,
**dadurch gekennzeichnet,**
**dass** die Anzahl der Leitungselemente (110) die Anzahl der Kondensatoreinheiten (10) um mehr als 1 übersteigt.

11. Leiterschleife (100) nach einem der Ansprüche 9 oder 10,
**dadurch gekennzeichnet,**
**dass** die Leitungselemente (110) zumindest teilweise metallische Rohre, insbesondere Aluminiumrohre, aufweisen.

12. Leiterschleife (100) nach einem der Ansprüche 9 bis 11,
**dadurch gekennzeichnet,**
**dass** die Leitungselemente (10) zumindest abschnittsweise biegbar und/oder zugbelastbar sind.

13. Verfahren für die Herstellung einer Leiterschleife (100), insbesondere mit den Merkmalen eines der Ansprüche 9 bis 12,
**dadurch gekennzeichnet,**
**dass** eine Mehrzahl von Kondensatorvorrichtungen (10) mit den Merkmalen eines der Ansprüche 1 bis 8 über ihre Anschlussschnittstellen (32a, 32b) mit jeweils zwei benachbarten Leitungselementen (110) elektrisch leitend und mechanisch verbunden werden.

14. Verfahren nach Anspruch 13
**dadurch gekennzeichnet,**
**dass** anschließend die Leiterschleife (100) wenigstens abschnittsweise mit einer Isolationsschicht (120) versehen wird.
